# EUROPEAN PATENT APPLICATION

(11) **EP 4 537 968 A1**
(43) Date of publication of application: **16.04.2025**
(21) Application number: 23275146.1
(22) Date of filing: 10.10.2023
(51) Int. Cl.: B23K 20/12, B23K 20/24, B23K 20/26, B23K 37/04

(54) **METHOD OF JOINING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of joining a first element (100) and a second element (200) to form an assembly. The method comprises positioning the first element (100) and the second element (200) relative to one another such that a first edge (102) of the first element (100) faces a second edge (202) of the second element (200) to define a join region (300) therebetween. The method further comprises friction welding a first fixing member (400) to the first element (100) such that the first fixing member (400) extends from the first side (104) of the first element (100) to a first free end (402) and friction welding a second fixing member (500) to the second element (200) such that the second fixing member (500) extends from the second side (204) of the second element (200) to a second free end (502). The method further comprises providing a support member (600), clamping the support member (600) to the first side of the first element (100) using the first fixing member (400) and clamping the support member (600) the second side of the second element (200) using the second fixing member (500). The method further comprises performing a joining process which couples the first element (100) and the second element (200) together.

## Description

### FIELD

The present disclosure relates to a method of joining.

In particular the disclosure is concerned with a method of joining a first element and a second element to form an assembly.

### BACKGROUND

It is a common requirement to join elements together to form a larger structure. For example, sheet metal elements may be joined by welding along their edges to form a larger structure. In some instances it is necessary to ensure the faces of the metal sheets are aligned (e.g. flush) with one another, and so must be held fixed relative to one another prior to welding.

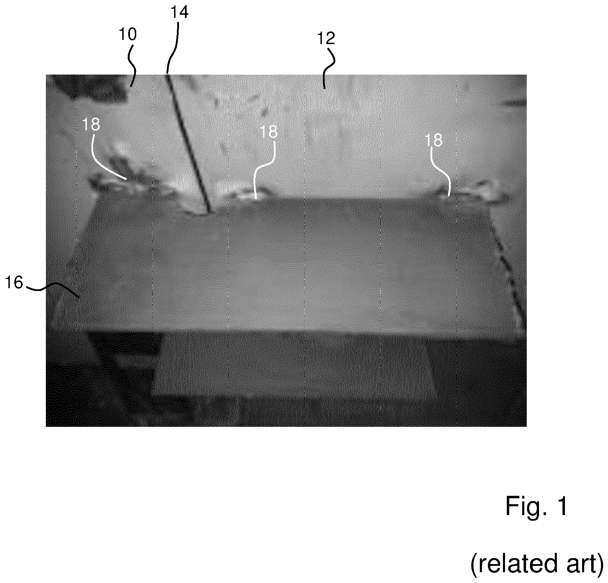

Figure 1 illustrates a first sheet metal element 10 and a second sheet metal element 12, with a gap 14 therebetween where a joining weld will be provided. A sheet metal support piece 16 is tack welded 18 to the surfaces of the first sheet metal element 10 and second sheet metal element 12 to align their surfaces and hold them in alignment while the joining welding process along the gap 14 is executed.

After the joining weld is provided along the gap 14, the sheet metal support piece 16 is removed by grinding the tack welds 18 off the first sheet metal element 10 and the second sheet metal element 12 and then dressing the tack welded regions 18 to smooth off the regions where the tack welds 18 had been provided on the first sheet metal element 10 and the second sheet metal element 12.

While effective, this process has many shortcomings. For example, in examples where the support piece 16 must be provided in an enclosed area (for example inside a structure being built) the tack welding produces fumes which obscure an operator's view and must be ventilated away so the user can breathe. Additionally the support pieces 16 must be held up by hand when being tack welded, which is tiring and potentially dangerous. Also the support pieces 16 can only be used once as after removal they are too badly damaged by the tack welding and grinding to be reused. Further, extensive dressing is required on the first sheet 10 and a second sheet 12 in the regions where the tack welding was done, since tack welding can result in significant penetration into the sheets 10, 12, resulting in flaws in the material.

Given that for a structure many such support pieces may need to be fitted and removed, a new process and/or apparatus which enables elements to be aligned and joined more quickly, with less waste and less damage being done to the elements being joined, and which is easier and safer for a user to execute, is highly desirable.

### SUMMARY

According to the present disclosure there is provided an apparatus and method as set forth in the appended claims. Other features of the invention will be apparent from the dependent claims, and the description which follows.

Accordingly there may be provided a method of joining a first element (100) and a second element (200) to form an assembly. The first element (100) may define a first edge (102) and a first side (104). The second element (200) may define a second edge (202) and a second side (204).

The method may comprise the step of positioning the first element (100) and the second element (200) relative to one another such that the first edge (102) of the first element (100) faces the second edge (202) of the second element (200) to define a join region (300) therebetween.

The method may comprise the step of friction welding a first fixing member (400) to the first element (100) such that the first fixing member (400) extends from the first side (104) of the first element (100) to a first free end (402).

The method may comprise the step of friction welding a second fixing member (500) to the second element (200) such that the second fixing member (500) extends from the second side (204) of the second element (200) to a second free end (502).

The method may comprise the step of providing a support member (600).

The method may comprise the step of clamping the support member (600) to the first side of the first element (100) using the first fixing member (400).

The method may comprise the step of clamping the support member (600) the second side of the second element (200) using the second fixing member (500).

The method may comprise the step of performing a joining process which couples the first element (100) and the second element (200) together.

The method may further comprise the step of detaching the support member (600) from the first element (100) and/or detaching the support member (600) from the second element (200).

The method may further comprise the step(s) of removing the first fixing member (400) from the first element (100) and/or removing the second fixing member (500) from the second element (200).

The method may further comprise the step(s) of machining the first side (104) of the first element (100) to smooth off the surface of the first side (104) in the region where the first fixing member (400) was friction welded to the first side (104); and/or machining the second side (204) of the second element (200) to smooth off the surface of the second side (204) in the region where the second fixing member (500) was friction welded to the second side (204).

The support member (600) may comprise a first wall member (602) and a second wall member (604). Each of the first wall member (602) and the second wall member (604) may extend between a first end (610) and a second end (612) in a longitudinal direction to define a length direction (L) of the support member (600). Each of the first wall member (602) the second wall member (604) may extend between a third end (614) and a fourth end (616) in a direction perpendicular to the longitudinal direction (L) to define a width direction (W) of the support member (600). The first end (610) of the first wall member (602) may be joined to the first end (610) of the second wall member (604). The second end (612) of the first wall member (602) may be joined to the second end (612) of the second wall member (604). A cavity (630) may be defined between the first wall member (602) and the second wall member (604) configured for the first fixing member (400) and the second fixing member (500) to extend at least part of the way therethrough.

The first wall member (602) and/or second wall member (604) may comprise a recess (620) along the third end (614) and/or fourth end (616).

The support member (600) may further comprise a third wall member (606) which extends between, and joins, the first end (610) of the first wall member (602) and the first end (610) of the second wall member (604), and/or the support member (600) further comprises a fourth wall member (608) which extends between, and joins, the second end (612) of the first wall member (602) and the second end (612) of the second wall member (604).

A first threaded portion (410) may extend from the first end (610) of the first fixing member (400) and a second threaded portion (510) may extend from the second end (612) of the second fixing member (500).

The step of clamping the support member (600) to the first element (100) may include attaching a first nut (404) to the first threaded portion (410) and tightening the first nut (404) against the support member (600).

The step of clamping the support member (600) to the second element (200) may include attaching a second nut (504) to the second threaded portion (510) and tightening the second nut (504) against the support member (600).

The first side (104) of the first element (100) may be flat and may extend perpendicular to the second edge (202).

The second side (204) of the second element (200) may be flat and extend perpendicular to the second edge (202).

The method may further comprise the step of aligning the first side (104) of the first element (100) and the second side (204) of the second element (200) before, or by, the step of clamping the support member (600) to the first side (104) of the first member and to the second side (204) of the second member.

The first element (100), second element (200) and fixing members (400, 500) may comprise metals which are compatible for the friction welding process.

The first element (100) and second element (200) may be plates.

The first fixing member (400) and the second fixing member (500) may be provided as a stud or a stud bolt.

The joining process may be a welding operation.

The method may further comprise the step of repeating any of the steps of the preceding paragraphs at one or more additional locations along the join region (300) such that a plurality support members (600) are provided along the join region (300).

There may also be provided an assembly manufactured by the method of claims the present disclosure wherein the assembly forms part of structure of a building, land vehicle, aircraft or watercraft.

Hence there is provided a new process and/or apparatus which enables elements to be aligned and joined more quickly, with less waste and less damage being done to the elements being joined, and which is easier and safer for a user to execute.

### BRIEF DESCRIPTION OF THE FIGURES

Embodiments of the invention will now be described by way of example only with reference to the figures, in which:
Figure 1 shows an example of the related art;
Figures 2, 3 shows apparatus and a stage in the method of the present disclosure;
Figure 4 shows an exploded view of a support member according to the present disclosure;
Figure 5 shows perspective view of the support member according to the present disclosure;
Figures 6, 7 show a plan view and end view respectively of an example first stage of the method of the present disclosure;
Figures 8, 9 show a plan view and end view respectively of an example second stage of the method of the present disclosure;
Figures 10, 11 show a plan view and end view respectively of an example third stage of the method of the present disclosure;
Figures 12, 13 show a plan view and end view respectively of an example fourth stage of the method of the present disclosure;
Figures 14, 15 show a plan view and end view respectively of an example fifth stage of the method of the present disclosure;
Figures 16, 17 show a plan view and end view respectively of an example sixth stage of the method of the present disclosure;
Figures 18, 19 show a plan view and end view respectively of an example seventh stage of the method of the present disclosure;
Figures 20, 21 show a plan view and end view respectively of an alternative example of an arrangement according to the present disclosure.

### DETAILED DESCRIPTION

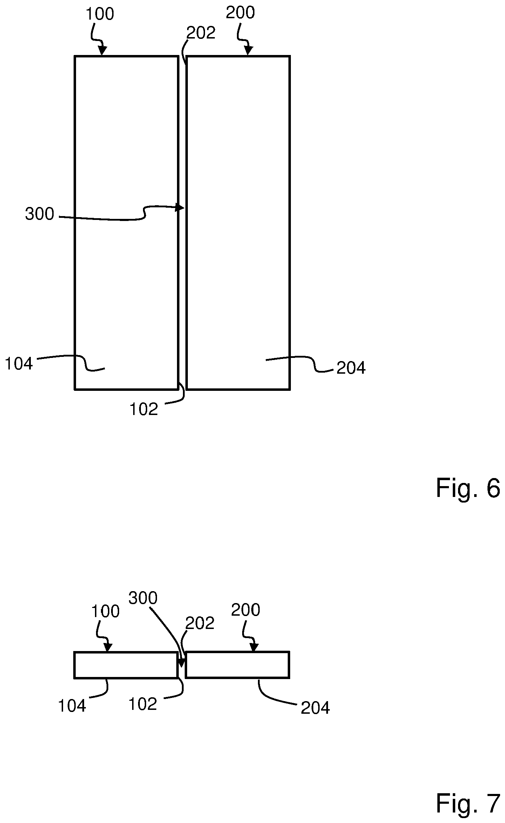

The present disclosure relates to a method of joining a first element 100 and a second element 200 to form an assembly. The method of the present disclosure may be executed in the order described or in an alternative order to that described. The method may be executed in the order shown in figures 6, 7 to figures 18, 19.

The present disclosure also relates to an assembly manufactured by the method of the present disclosure. The assembly may form part of a structure of an article, a building, land vehicle, aircraft or watercraft.

As illustrated in the figures, the first element 100 may define a first edge 102 and a first side 104, and the first side 104 extends away from the first edge 102. Likewise, the second element 200 may define a second edge 202 and a second side 204, and the second side 204 extends away from the second edge 202. The first element 100 and second element 200 may be provided as plates or sheets. For example, the first element 100 and second element 200 may be provided as metal plates or metal sheets.

As shown in figures 6, 7, the method of assembly may comprise the step of positioning the first element 100 and the second element 200 relative to one another such that the first edge 102 of the first element 100 faces the second edge 202 of the second element 200 to define a join region 300 therebetween.

As shown in the figures, the first edge 102 and second edge 202 may be spaced apart so the join region 300 is provided as a clearance gap 302. In another example, not shown, the first edge 102 and second edge 202 may touch one another.

The first side 104 of the first element 100 may be flat and extend perpendicular to the second edge 202. The second side 204 of the second element 200 may be flat and extend perpendicular to the second edge 202.

In other examples, not shown, a first side 104 of the first element 100 and/or second element 200 may be curved and/or extend away at an angle to the respective edge 102, 202.

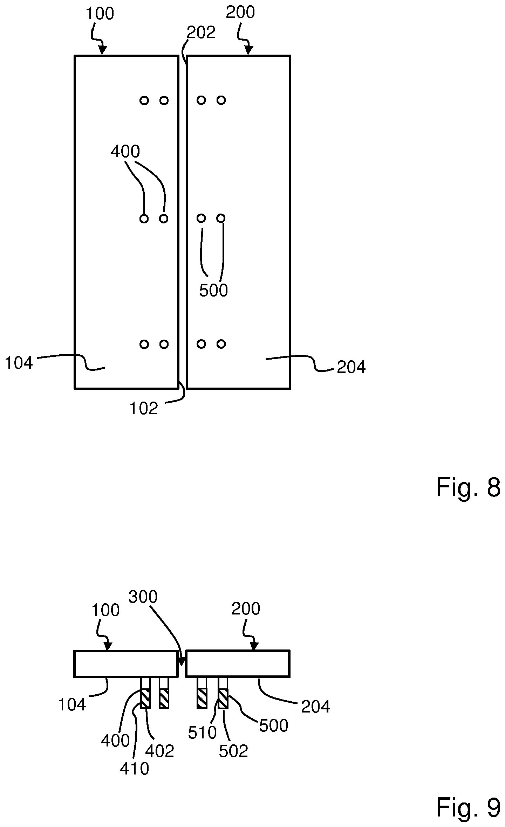

As shown in figures 8, 9 the method may further comprise the step of attaching (for example by friction welding) a first fixing member 400 to the first element 100 such that the first fixing member 400 extends from the first side 104 of the first element 100 to a first free end 402. Also as shown in figures 8, 9 the method may further comprise the step of attaching (for example by friction welding) a second fixing member 500 to the second element 200 such that the second fixing member 500 extends from the second side 204 of the second element 200 to a second free end 502.

As shown in the figures, there may be provided one or more first fixing members 400 on the first element 100 and/or one or more second fixing members 500 on the second element 200.

The first element 100, second element 200 and fixing members 400, 500 may comprise metals which are compatible for the friction welding process.

The first fixing member 400 and the second fixing member 500 may be provided as a stud or a stud bolt.

A first threaded portion 410 may extend from the first end 610 of the first fixing member 400. A second threaded portion 510 may extend from the second end 612 of the second fixing member 500.

The method may further comprise the step of providing a support member 600. The support member may be termed a "strong back".

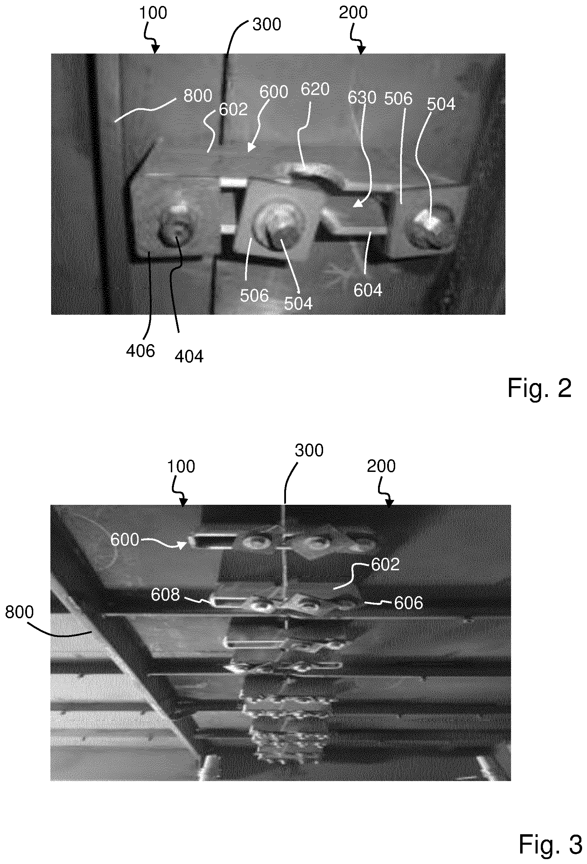

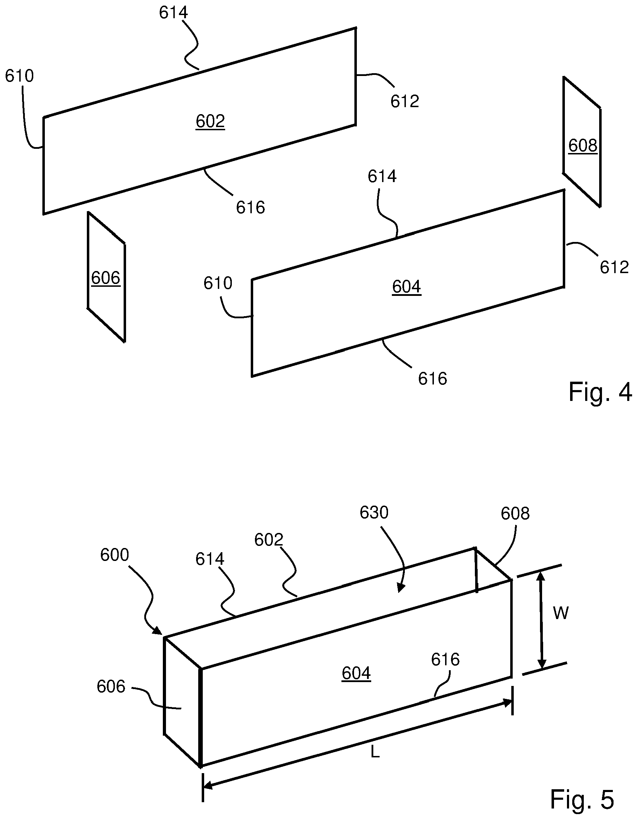

As shown in figures 2 to 5, and in particular in the exploded view of figure 4 and assembled view of figure 5, the support member 600 may comprise a first wall member 602 and a second wall member 604, each of the first wall member 602 and the second wall member 604 extending between a first end 610 and a second end 612 in a longitudinal direction to define a length direction L of the support member 600. Each of the first wall member 602 the second wall member 604 may extend between a third end 614 and a fourth end 616 in a direction perpendicular (e.g. transverse) to the longitudinal direction L to define a width direction W of the support member 600.

The first end 610 of the first wall member 602 may be joined to the first end 610 of the second wall member 604. The second end 612 of the first wall member 602 may be joined to the second end 612 of the second wall member 604. The first wall member 602 and second wall member 604 are spaced apart from one another, at least along part of their length, to define a cavity 630 therebetween. The cavity 630 is configured for the first fixing member 400 and the second fixing member 500 to extend at least part of the way therethrough. That is to say, the cavity 630 is configured so that the first fixing member 400 and the second fixing member 500 may be located within the cavity 630. The first fixing member 400 and the second fixing member 500 may be longer than the width W of the support member 600, and hence their free ends 402, 502 may extend from the cavity 630.

Hence, as shown in figure 5, the support member 200 may be provided as a rectangular prism. That is to say, the support member 200 may be a hollow rectangular prism, open on two faces.

The first end 610 of the first wall member 602 may be joined directly to the first end 610 of the second wall member 604. Alternatively, as shown in figures 4, 5, the support member 600 may further comprise a third wall member 606 which extends between, and joins, the first end 610 of the first wall member 602 and the first end 610 of the second wall member 604.

The second end 612 of the first wall member 602 may be joined directly to the second end 612 of the second wall member 604. Alternatively, as shown in figures 4, 5, the support member 600 may further comprise a fourth wall member 608 which extends between, and joins, the second end 612 of the first wall member 602 and the second end 612 of the second wall member 604.

In other examples, not shown, the support member 600 may be provided as a solid bar with passages, and/or one or more slots, which extend through the body of the support member 600, for receiving the fixing members 400, 500.

The wall members 602, 604, 606, 608 of the support member 600 may be made from a lightweight material, for example a lightweight metal. The wall members 602, 604, 606, 608 of the support member 600 may be made from aluminium or an aluminium alloy.

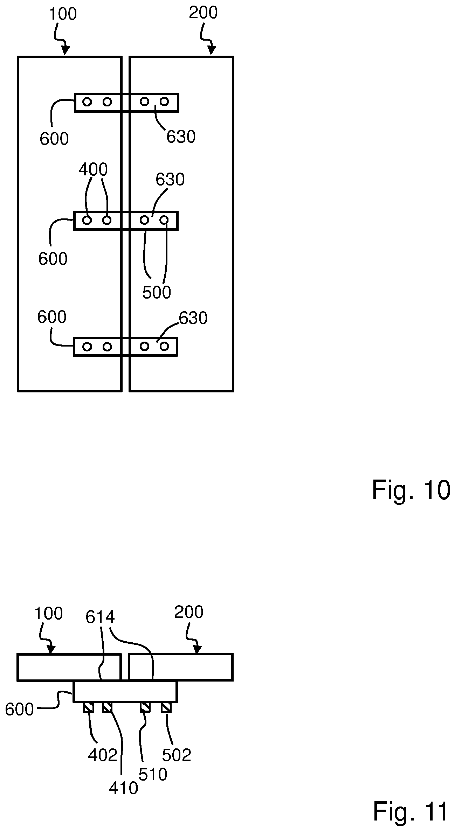

As illustrated in figures 10, 11, the method may comprise the step of locating the support member 600 on the first side 104 of the first element 100 and the second side 204 of the second element 200.

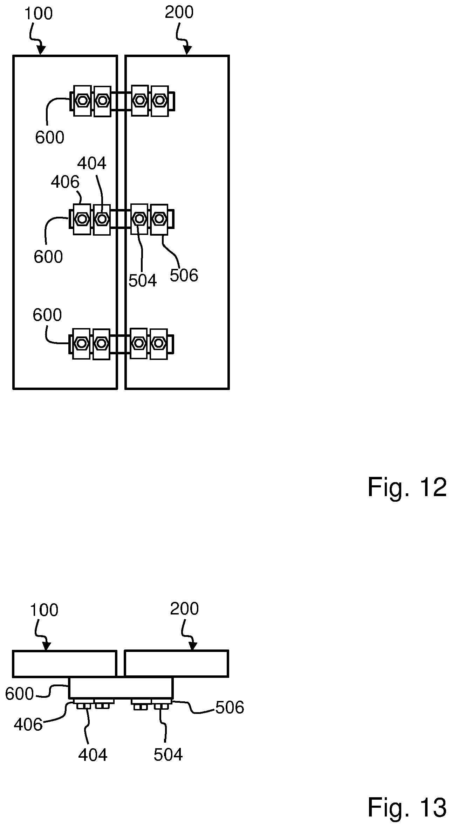

As shown in figures 12, 13 the method may comprise the step of clamping the support member 600 to the first side 104 of the first element 100. For example, the method may comprise the step of using the first fixing member 400 to clamp the support member 600 to the first side 104 of the first element 100. The method may comprise the step of clamping the support member 600 to the first side 104 of the first element 100 by fitting a first nut 404 to the first fixing member 400 and tightening the first nut 404 down on the support member 600. A first washer or plate 406 may be provided between the first nut 404 and the support member 600.

The step of clamping the support member 600 to the first element 100 may include attaching the first nut 404 to the first threaded portion 410 and tightening the first nut 404 against the support member 600 by rotating it along the first threaded portion 410.

The method may comprise the step of clamping the support member 600 to the second side 204 of the second element 200. For example, the method may comprise the step of using the second fixing member 500 to clamp the support member 600 to the second side 204 of the second element 200. The method may comprise the step of clamping the support member 600 to the second side 204 of the second element 200 by fitting a second nut 504 to the second fixing member 500 and tightening the second nut 504 down on the support member 600. A second washer or plate 506 may be provided between the second nut 504 and the support member 600.

The step of clamping the support member 600 to the second element 200 may include attaching the second nut 504 to the second threaded portion 510 and tightening the second nut 504 against the support member 600 by rotating it along the second threaded portion 510.

Hence the fixing members 400, 500 may be of smaller diameter / width than the distance between the first wall member 602 and the second wall member 604 in the region where the fixing members 400, 500 extend, but the nuts 404, 504 and/or the washers/plates 406, 506 may be wider than the distance between the first wall member 602 and the second wall member 604 in the region where the fixing members 400, 500 extend.

The third end 614 or fourth end 616 of first wall member 602 and the second wall member 604 may be configured for contact with the first side 104 of the first element 100 and the second side 204 of the second element 200.

When the support member 600 is mounted (for example, clamped) to the first side 104 of the first element 100 and the second side 204 of the second element 200, the third end 614 or fourth end 616 of the first wall member 602 and the second wall member 604 may be in direct contact with the first side 104 of the first element 100 and the second side 204 of the second element 200.

When the support member 600 is mounted (for example, clamped) to the first side 104 of the first element 100 and the second side 204 of the second element 200, the third end 614 or fourth end 616 of the first wall member 602 and the second wall member 604 may be forced towards the first side 104 of the first element 100 and the second side 204 of the second element 200. A spacer (not shown) may be provided between the support member 600 and the first side 104 of the first element 100 and the second side 204 of the second element 200.

The third end 614 or fourth end 616 of first wall member 602 and the second wall member 604 may be configured for contact with the first side 104 of the first element 100 and the second side 204 of the second element 200. For example, at least part of the third end 614 or fourth end 616 of the first wall member 602 and the second wall member 604 may be shaped to have the same contour / profile as the region of the first side 104 of the first element 100 and the region of the second side 204 of the second element 200 they are configured to engage with.

The first fixing member 400, the second fixing member 500, the first wall member 602 and the second wall member 604 may be configured such that the first fixing member 400 and the second fixing member 500 are longer than the width W of the support member 600 such that the first fixing member 400 and second fixing member 500 extend through the cavity 630 such that the first free end 402 and second free end 502 extend beyond the first wall member 602 and the second wall member 604.

Alternatively, the first fixing member 400 and second fixing member 500 may be the same length or shorter than the first wall member 602 and the second wall member 604 so the first free end 402 of the first fixing member 400 and the second free end 502 of the second fixing member 500 are flush with the edge of the first wall member 602 and the second wall member 604 or are within the cavity 630. For example a shoulder may be provided within the cavity 630 for the nuts 404, 504 provided within support member 600 to clamp against.

The support member 600 may have a length L of at least 300mm but no more than 600 mm.

The support member 600 may have a width W of at least 40mm but no more than half the length L.

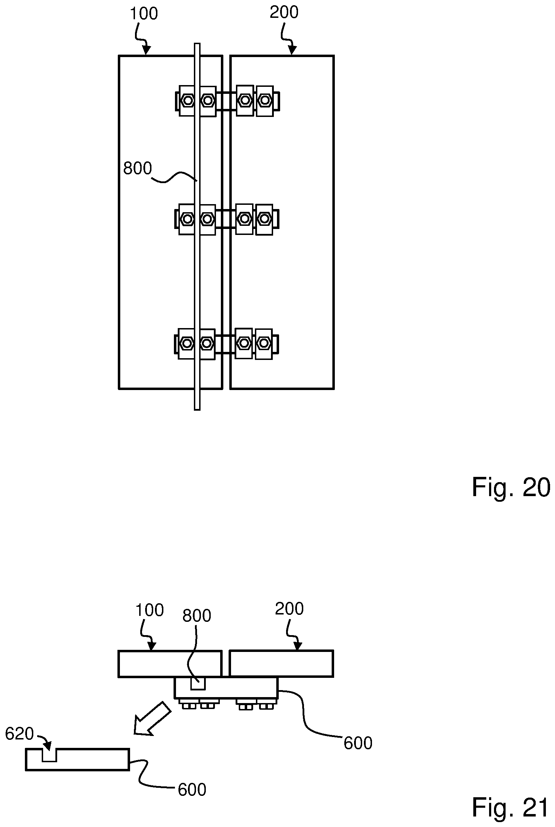

The first wall member 602 and/or second wall member 604 may comprise a recess 620 along the third end 614 and/or fourth end 616. The recess 620 may be configured for spanning features such as a support bar 800 (as shown in figures 2, 3, 20, 21) on the first side 104 of the first element 100 and/or second side 204 of the second element 200. The recess 620 may be provided for spanning the welding/join region 300 so that weld formed in the join region does not extend and join to the material of the support member 600.

The support member 600 is thus configured and provided to extend across the join region 300 to thereby fix the first side 104 of the first element 100 relative to the second side 204 of the second element 200 in the region of the support member 600. Attaching and/or clamping the support member 600 to the first element 100 and second element 200 thus prevents relative movement between the first fixing member 400 and the second fixing member 500 along the length L of the support member 600. In this way, relative movement of the first element 100 and the second element 200 is prevented in the region of the support member 600.

The method of the present disclosure may comprise the step of providing fixing members 400, 500 and a support member 600 at one or more additional locations along the join region 300 such that a plurality support members 600 are provided along the join region 300. In the figures there are provided three sets of fixing members 400, 500 and support members 600 along the length of the join region 300 and along the length of the first element 100 and second element 200. Depending on the length of the join region 300, first element 100 and second element 200 there may be provided more or fewer sets of fixing members 400, 500 and support members 600.

The method may further comprise the step of aligning the first side 104 of the first element 100 and the second side 204 of the second element 200 before, or by, the step of clamping the support member 600 to the first side 104 of the first member and to the second side 204 of the second member such that (as shown in the figures) the first side 104 of the first member and the second side 204 of the second member extend in same plane.

That is to say, the method may further comprise the step of levelling the first side 104 of the first element 100 and the second side 204 of the second element 200 such that the first side 104 and second side 204 are level before, or by, the step of clamping the support member 600 to the first side 104 of the first member and to the second side 204 of the second member such that (as shown in the figures) the first side 104 of the first member and the second side 204 of the second member extend in same plane.

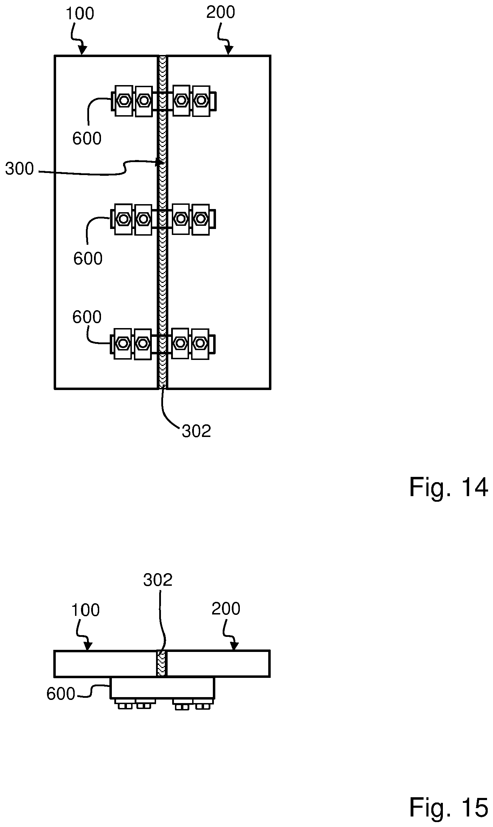

As illustrated in figures 14, 15, the method may further comprise the step of performing a joining process (for example welding) which couples the first element 100 and the second element 200 together. The joining process may be a welding operation. The joining process may form a weld 302 in/along the join region 300. That is to say, the method may comprise the step of performing a welding operation along at least part of the join region 300, such that the first element 100 and the second element 200 are welded together and hence joined to each other.

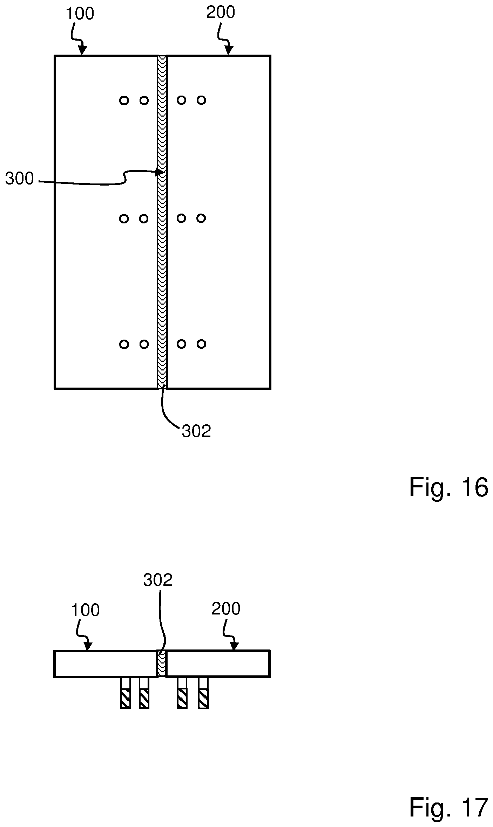

As illustrated in figures 16, 17, the method may further comprise the steps of (after the welding process is complete) detaching the support member 600 from the first element and/or detaching the support member 600 from the second element 200.

For example, the method may further comprise the steps of (after the welding process is complete) detaching the support member 600 from the first element 100 by undoing the first nut 404 and first washer 406 and removing the support member 600 from the first element 100 to thereby unclamp the support member 600 from the first element 100 and/or detaching the support member 600 from the second element 200 by undoing the second nut 504 and second washer 506 and removing the support member 600 from the second element 200 to thereby unclamp the support member 600 from the second element 200.

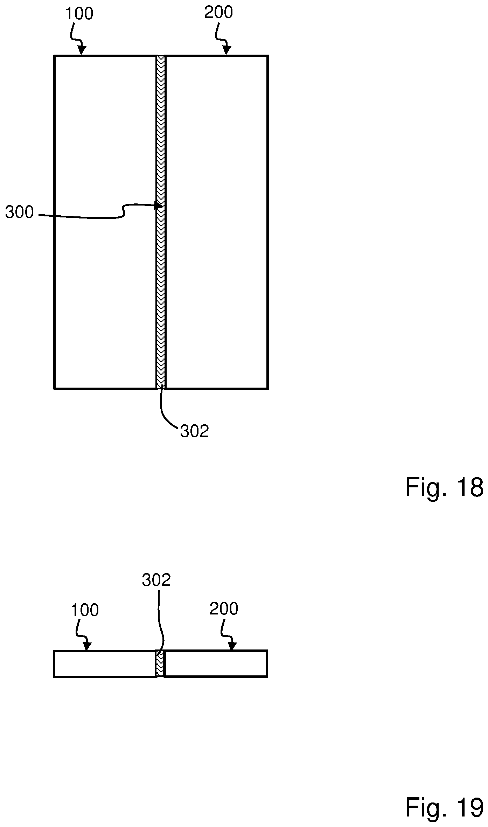

As illustrated in figures 18, 19 the method may further comprise the steps of removing/detaching the first fixing member 400 from the first side 104 of the first element 100 and/or removing/detaching the second fixing member 500 from the second side 404 of the second element 200. The removal/detachment may be by performing a cutting process, for example grinding.

The method may further comprise the steps of machining the first side 104 of the first element 100 to smooth off the surface of the first side 104 in the region where the first fixing member 400 was friction welded to the first side 104 and/or machining the second side 204 of the second element 200 to smooth off the surface of the second side 204 in the region where the second fixing member 500 was friction welded to the second side 204.

Hence there is provided a new process and/or apparatus which enables elements to be aligned and joined more quickly, with less waste and less damage being done to the elements being joined, and which is easier and safer for a user to execute.

The provision of friction welded fixing members 400, 500 to clamp the support member 600 to the first element 100 and second element 200 avoids the need to tack weld the support member 600 as may be done in the related art, which avoids the visibility and user respiration issues of the related art since friction welding the fixing members produces no such fumes.

Holding the support member 600 in place while it is clamped is much easier and less hazardous than in the related art where the support member may be welded, especially in examples where the support member 600 is made from aluminium.

Since the support member 600 is clamped into place, rather than being task welded, the support member 600 can be re-used, saving on materials and reducing waste to be processed.

Additionally friction welding does not result in the same degree of penetration into the sheet metal elements as would occur for tack welding, and so dressing / smoothing off the surfaces of the sheet metal elements after the studs have been removed is quicker and reduces the possibility of flaws being introduced into the sheet metal elements.

All of the above advantages mean that the process and apparatus of the present disclosure produce significant time and material savings, as well be enabling a clearer and safer working environment for the operator working the process, than example processes and apparatus of the related art. It is estimated that the process and apparatus of the present disclosure may take 49% less time than conventional processes using tack welding, providing high savings in labour time.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of joining a first element (100) and a second element (200) to form an assembly; the first element (100) defining a first edge (102) and a first side (104); the second element (200) defining a second edge (202) and a second side (204);
the method comprising the steps of:
positioning the first element (100) and the second element (200) relative to one another such that the first edge (102) of the first element (100) faces the second edge (202) of the second element (200) to define a join region (300) therebetween;
friction welding a first fixing member (400) to the first element (100) such that the first fixing member (400) extends from the first side (104) of the first element (100) to a first free end (402);
friction welding a second fixing member (500) to the second element (200) such that the second fixing member (500) extends from the second side (204) of the second element (200) to a second free end (502);
providing a support member (600);
clamping the support member (600) to the first side of the first element (100) using the first fixing member (400);
clamping the support member (600) the second side of the second element (200) using the second fixing member (500);
performing a joining process which couples the first element (100) and the second element (200) together.

2. A method as claimed in claim 1 wherein the method further comprises the steps of: detaching the support member (600) from the first element (100) and/or detaching the support member (600) from the second element (200).

3. A method as claimed in claim 1 or claim 2, wherein the method further comprises the step(s) of: removing the first fixing member (400) from the first element (100) and/or removing the second fixing member (500) from the second element (200).

4. A method as claimed in claim 3 wherein the method further comprises the step(s) of: machining the first side (104) of the first element (100) to smooth off the surface of the first side (104) in the region where the first fixing member (400) was friction welded to the first side (104); and/or machining the second side (204) of the second element (200) to smooth off the surface of the second side (204) in the region where the second fixing member (500) was friction welded to the second side (204).

5. A method as claimed in any one of claims 1 to 4 wherein the support member (600) comprises: a first wall member (602) and a second wall member (604), each of the first wall member (602) and the second wall member (604) extending between a first end (610) and a second end (612) in a longitudinal direction to define a length direction (L) of the support member (600), and each of the first wall member (602) the second wall member (604) extending between a third end (614) and a fourth end (616) in a direction perpendicular to the longitudinal direction (L) to define a width direction (W) of the support member (600); the first end (610) of the first wall member (602) being joined to the first end (610) of the second wall member (604) and the second end (612) of the first wall member (602) being joined to the second end (612) of the second wall member (604), with a cavity (630) defined between the first wall member (602) and the second wall member (604) configured for the first fixing member (400) and the second fixing member (500) to extend at least part of the way therethrough.

6. A method as claimed in claim 5 wherein the first wall member (602) and/or second wall member (604) comprise a recess (620) along the third end (614) and/or fourth end (616).

7. A method as claimed in claim 5 or claim 6 wherein the support member (600) further comprises a third wall member (606) which extends between, and joins, the first end (610) of the first wall member (602) and the first end (610) of the second wall member (604), and/or the support member (600) further comprises a fourth wall member (608) which extends between, and joins, the second end (612) of the first wall member (602) and the second end (612) of the second wall member (604).

8. A method as claimed in any one of claims 1 to 7 wherein a first threaded portion (410) extends from the first end (610) of the first fixing member (400) and a second threaded portion (510) extends from the second end (612) of the second fixing member (500); and
the step of clamping the support member (600) to the first element (100) includes attaching a first nut (404) to the first threaded portion (410) and tightening the first nut (404) against the support member (600);
the step of clamping the support member (600) to the second element (200) includes attaching a second nut (504) to the second threaded portion (510) and tightening the second nut (504) against the support member (600).

9. A method as claimed in any one of claims 1 to 8 wherein:
the first side (104) of the first element (100) is flat and extends perpendicular to the second edge (202); and/or
the second side (204) of the second element (200) is flat and extends perpendicular to the second edge (202).

10. A method as claimed in any one of claims 1 to 9 comprising the step of aligning the first side (104) of the first element (100) and the second side (204) of the second element (200) before, or by, the step of clamping the support member (600) to the first side (104) of the first member and to the second side (204) of the second member.

11. A method as claimed in any one of claims 1 to 10 wherein the first element (100), second element (200) and fixing members (400, 500) comprise metals which are compatible for the friction welding process.

12. A method as claimed in any one of claims 1 to 11 wherein:
the first element (100) and second element (200) are plates; and/or
the first fixing member (400) and the second fixing member (500) are provided as a stud or a stud bolt.

13. A method as claimed in any one of claims 1 to 12 wherein the joining process is a welding operation.

14. A method as claimed in any one of claims 1 to 13 comprising the step of repeating the method of any one of claims 1 to 13 at one or more additional locations along the join region (300) such that a plurality support members (600) are provided along the join region (300).

15. An assembly manufactured by the method of claims 1 to 14 wherein the assembly forms part of structure of a building, land vehicle, aircraft or watercraft.
